# EUROPEAN PATENT SPECIFICATION

(11) **EP 3 390 868 B1**
(45) Date of publication and mention of the grant of the patent: **27.05.2020**
(21) Application number: 16823222.1
(22) Date of filing: 16.12.2016
(51) Int. Cl.: F16H 61/662, F16H 61/00

(54) **HYDRAULIC SYSTEM AND METHOD FOR CONTROLLING PRESSURE IN A HYDRAULIC SYSTEM**
HYDRAULISCHES SYSTEM UND VERFAHREN ZUR STEUERUNG DES DRUCKS IN EINEM HYDRAULISCHEN SYSTEM
SYSTÈME HYDRAULIQUE ET PROCÉDÉ POUR COMMANDER UNE PRESSION DANS UN SYSTÈME HYDRAULIQUE

(30) Priority: 16.12.2015 BE 201505822
(43) Date of publication of application: 24.10.2018
(73) Proprietor: Punch Powertrain N.V., 3800 Sint-Truiden (BE)
(72) Inventor: VAN RAEMSDONCK, Stefan, 3800 Sint-Truiden (BE); VAN LEEUWEN, Dennis, 3800 Sint-Truiden (BE); VOORDEHAKE, Sebastiaan, 3800 Sint-Truiden (BE)
(74) Representative: V.O.
(86) International application number: PCT/EP2016/081463
(87) International publication number: WO 2017/103132

(56) References cited:
- WO-A1-03/087627
- WO-A1-2009/084952
- DE-A1- 4 331 266
- JP-A- H11 280 643

## Description

### FIELD OF THE INVENTION

The invention relates to a hydraulic system for a vehicle transmission with at least a primary friction element and a secondary friction element for coupling and transmitting engine power to wheels of the vehicle by actuation of the friction elements via the hydraulic system.

### BACKGROUND TO THE INVENTION

Generally, a transmission provides controlled application of engine power by conversion of speed and torque from a power source, such as for example an internal combustion engine or an electrical machine. The hydraulic system may provide for actuation of friction elements in the vehicle transmission for coupling the transmission input to the geartrain to transmit engine power to the wheels of the vehicle.

Such transmissions comprising friction elements are known, for example a continuous variable transmission (CVT) is a well known transmission incorporating friction elements. The friction elements can be embodied as pulleys between which a flexible element such as a chain or a belt can be clamped by means of friction force.

Typically, the hydraulic system is a dual system having a circuit for actuation of the friction elements, the so-called line pressure circuit, and having a circuit for lubrication and/or cooling the so-called lubrication circuit. Typically, the line pressure circuit works on relatively high pressures, whereas the lubrication circuit works on lower pressures.

The hydraulic system uses operating elements, preferably operating elements that transfer electrical energy as input to mechanical and/or hydraulically energy as output. Such operating elements typically are embodied as solenoids that control components, such as valves, of various parts of the hydraulic system when receiving an electrical input signal. Typically, there is a line solenoid for controlling the line pressure valve, a primary solenoid for controlling the primary valve of the primary friction element, a secondary solenoid for controlling the secondary valve of the secondary friction element, a clutch solenoid for controlling the clutch valve, torque converter solenoid for controlling the torque converter pressure valve, and a bypass solenoid for controlling a bypass valve. Other solenoids for controlling other valves present in the hydraulic system may be provided.

Solenoids are relatively expensive components and require energy for actuation. As the hydraulic system is being pressurized by a pump system which uses energy from a power source for driving the pump system and pressurizing the hydraulic system, there is an ongoing quest for reducing the energy consumption of the hydraulic system. The energy for powering the hydraulic system cannot be used for driving the vehicle. The power source can be e.g. a combustion engine, or a battery, or an electrical machine etc.

Further, the so-called boost function may require an acute or rapid change of flow in the line pressure circuit, preferably without a change in pressure level. Thereto, systems can be provided with an additional pump, which is being regulated by an additional operating element or additional solenoid, see e.g. EP1482215 for such a system. A drawback of this system may be that it is relatively expensive in view of the number of components required, in particular if relatively expensive solenoids are used.

Alternatively, to reduce the number of solenoids, often a dedicated line solenoid is omitted and only a primary and secondary solenoid is used to control the primary and secondary pressure on the primary and secondary friction element respectively. A drawback of such a control system however may be that the minimum pressure that can be used for clamping of the flexible element between the friction elements, e.g. the belt of a continuous variable transmission (CVT) is the same as the line pressure and thus may remain relatively high. For lower torque levels, this may result in poor efficiency of the transmission.

DE 4331266 discloses a hydraulic pressure circuit for a CVT having two pressure control elements for controlling the pressure on the respective friction elements of the CVT.

An object of the invention is to provide for a hydraulic system that obviates at least one of the aforementioned drawbacks. In particular, a hydraulic system is aimed for that preferably achieves at least the same performance as the prior art systems preferably in a more cost effective way.

### SUMMARY OF THE INVENTION

Thereto, the invention provides for a hydraulic system according to claim 1.

By providing an operating element having at least two functions, of operating the bypass valve and of operating the secondary valve, less components may be used in the hydraulic system, providing for a more cost effective and/or more reliable hydraulic system.

The pump system comprises at least two outlet lines, for example the pump system may be embodied as a single pump having two pump chambers, or may be embodied as a dual pump or as two pumps. In normal operation, both pumps or pump chambers are operating and delivering flow to the two outlet lines. In the normal situation, the flow of the two outlet lines is delivered to the hydraulic system and generates pressure in the hydraulic system, then the bypass circuit is by having the bypass valve closed so there is no flow in the bypass circuit. The pressure in the line pressure circuit, the lubrication circuit and to the various components is controlled by various operating elements. In a determined state, when less torque is required on the friction elements; the bypass operating element can be actuated to open the bypass circuit to reduce the flow supplied to the line pressure circuit and additionally to reduce the pressure on the secondary friction element to a value lower than the pressure on the primary friction element, such that less torque is provided. This can for example be the case in overdrive situations. The pressure on the secondary friction element can then be lower than the pressure on the primary friction element. Then the bypass valve is opened to allow flow through the bypass circuit, such that pressure on one of the two pump system outlet lines is reduced. The flow delivered to the hydraulic system is now reduced partially, as only the flow of one pump is being entered into the circuit. Depending on the configuration of the pump system, the flow is reduced partially, for example when both pumps or pump chambers are equally sized, the flow is reduced by half, but other partiality is possible as well. The second pump can basically be running on idle having about the same inlet and outlet pressure, so less energy is consumed from the engine. The bypass operating element controls the opening of the bypass valve. Additionally, to reduce the pressure on the secondary friction element, the bypass operating element controls the secondary valve to close such that the pressure on the secondary friction element falls lower than the pressure on the primary friction element. As such, a single operating element can perform two functions, so less relatively expensive solenoids can be used resulting in lower costs for the hydraulic system.

Also, the maximum pressure level on the primary friction element, regulated by the primary valve and independently controlled by the primary operating element, can be reduced to the minimum system pressure level. This is contrary to master/slave prior art systems. According to the invention, e.g. in overdrive when the pressure on the secondary friction element can be lower than the pressure on the primary friction element, a relatively low secondary pressure can be obtained, resulting in a better performance of the transmission at lower torque. By reducing the pressure on the secondary friction element, the friction force on the secondary friction element is reduced, resulting in less fuel consumption as there is less power required for friction force on the secondary friction element.

Advantageously, the line pressure valve is biased towards a predetermined bottom limit line pressure, such that in a fail-safe mode, when no actuation to operating elements is provided, the line pressure is reduced to the bottom limit line pressure resulting in reduced actuation of the friction elements to provide for a slow-down mode of the vehicle. The bias of the line pressure valve typically is provided by the spring force on the line pressure valve. In a fail safe mode, when there is no actuation of the operating elements, e.g. when there is a failure in the electrical circuit or there is an engine failure, or an other failure resulting in loss of the actuation of the operating elements, there is no actuation of the line pressure valve either, then the line pressure valve switches to its biased position, i.e. a predetermined bottom line pressure. As such, there remains sufficient, though limited, pressure in the hydraulic system for providing reduced actuation of the friction elements such that the vehicle can in a controlled mode slow down to allow for a safe stop in case of a failure.

More advantageously, in case of a failure, the fail-safe mode provides for a limp-home mode. Thereto, the line pressure valve is biased towards a non-bottom limit line pressure, which is higher than the bottom limit line pressure, such that, in the fail-safe mode, the line pressure is set to a predetermined pressure to provide for sufficient actuation of the friction elements such that the vehicle can safely 'limp home'.

Preferably, to provide for the limp home-mode, the bypass operating element has a third function of regulating the line pressure valve. When actuated, the bypass operating element controls the line pressure valve against the spring action of the bias spring to regulate the line pressure. When there is no actuation of the operating elements, such as in a failure mode, the bias spring of the line pressure valve biases the pressure towards the non-bottom limit pressure to allow for the limp home mode of the vehicle.

The invention also relates to a method for controlling pressure.

Further advantageous embodiments are represented in the subclaims.

### BRIEF DESCRIPTION OF THE DRAWING

The invention will further be elucidated on the basis of exemplary embodiments which are represented in the drawings. The exemplary embodiments are given by way of non-limitative illustration of the invention.

In the drawing:
Fig. 1 shows a schematic diagram of an embodiment of a hydraulic system according to the invention;
Fig. 2 shows a schematic diagram of the embodiment of Fig. 1 including the limp home functionality;

It is noted that the figures are only schematic representations of embodiments of the invention that are given by way of non-limiting example. In the figures, the same or corresponding parts are designated with the same reference numerals.

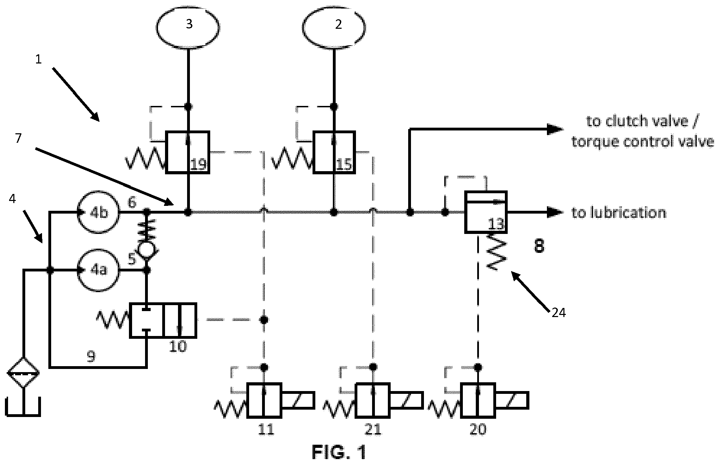

Figure 1 shows a schematic diagram of a hydraulic system 1 for a vehicle transmission with at least a primary friction element 2 and a secondary friction element 3. An example of a transmission using friction elements is a continuously variable transmission (CVT).

The primary and secondary friction elements 2, 3 provide for coupling and transmitting engine power to wheels of the vehicle by actuation of the friction elements 2, 3 via the hydraulic system 1.

The hydraulic system 1 comprises a pressure pump system 4 having at least two outlet lines 5, 6. The pressure pump system 4 can be embodied as a pump having two pump chambers, or as a two pumps each having a pump chamber, etc. Many variants are possible. Here, the pressure pump system 4 is schematically represented by two pumps 4a, 4b having outlet line 5 and 6 respectively.

The pump system 4 is being powered by the engine and pressurizes the hydraulic fluid of the hydraulic system 1. The pressurized fluid is supplied to the hydraulic system 1. The hydraulic system 1 is typically a dual system comprising a line pressure circuit 7 in which the fluid has a relatively high pressure (approximately 5 - 80 bar, preferably 7 - 70 bar) and a lubrication circuit 8 with a lower pressure (approximately 5 - 10 bar, preferably 6 - 9 bar). The lubrication circuit 8 is mainly for cooling and lubrication of components of the transmission and will not be elaborated further. It is noted that the high pressure range and the low pressure range are overlapping, but it is also noted that the high pressure is at any time higher than the low pressure, so there is no overlap of the pressure during use.

In the line pressure circuit 7, operating elements or solenoids operate valves in the line pressure circuit for controlling the pressure on components of the transmission, such as the primary friction element, or the secondary friction element, or a clutch, or the pressure in the line pressure circuit itself, etc.

The pressure pump system 4 has two outlet lines 5, 6 which are coupled to the line pressure circuit 7. The pressure pump system 4 is further provided with a bypass circuit 9 that is controlled by a bypass valve 10. When the bypass circuit 9 is open, with bypass valve 10 open, there is flow through the bypass circuit and the output flow of the pressure system 4 is reduced and the pressure in one of the outlet lines, here outlet line 5, becomes reduced. When the bypass circuit 9 is closed, the bypass valve 10 is closed, and the output flow of one of the outlet lines, here outlet line 5, is supplied to the line pressure circuit 7. This is also referred to as the "boost" function, as the output flow of the pump system 4 then rapidly, almost immediately, increases. The bypass valve 10 is controlled by a bypass operating element 11. By providing the bypass circuit 9, the pressure and output flow of the second pump or pump chamber 4a is always available, but is not always supplied to the line pressure circuit 7. As such, when the additional pump flow is not required (no boosting), less energy is consumed from the engine.

In the line pressure circuit 7 various valves are provided for controlling pressure on components of the transmission and/or hydraulic system. There is the solenoid feed valve, not shown here, that controls the pressure on the operating elements or solenoids. A line pressure valve 13 is provided that controls the pressure in the line pressure circuit 7. An output of the line pressure valve 13 is supplied to the lubrication circuit 8 with a lubrication valve. An output of the lubrication valve typically is fed back to the pump system 4.

There is also provided a primary valve 15 for controlling the pressure on the primary friction element 2. Via the primary valve 15 further fluid flow can be provided to a selection valve, not shown here, that controls a forward clutch and a reverse clutch. Further, a secondary valve 19 is provided in the line pressure circuit 7 that controls the secondary friction element 3. The line pressure circuit 7 also comprises a clutch valve and torque control valve, not shown here.

The various valves 13, 15, 19 are operated by operating elements or solenoids. The line pressure valve 13 is operated by the line operating element 20. The primary valve 15 is operated by the primary operating element 21. Further, in an embodiment of the hydraulic system, a clutch valve and/or a torque control valve can be provided, that operate the clutch valve and torque control valve respectively.

The secondary valve 19 is in prior art system controlled by a secondary operating element. Here, according to the invention, the secondary valve 19 is also controlled by the bypass solenoid 11. As such, the bypass solenoid 11 has two functions of operating the bypass valve 10 and of operating the secondary valve 19. This is advantageous, as, according to the invention, a dedicated solenoid can be obviated and thus energy, for controlling the solenoid, and costs, of providing the solenoid, can be saved by omitting one solenoid.

Here, the bypass solenoid 11 is arranged such that, after actuation of the bypass valve 10, the pressure on the secondary friction element 3 falls lower than the pressure on the primary friction element 2. This is particularly advantageous when the transmission is in overdrive. Then, the pressure on the secondary friction element 3 is advantageously lower than the pressure on the primary friction element 2, so that less energy is required for providing friction force on the secondary friction element during overdrive. Thereby, the energy consumption is reduced and more engine power is available for driving the vehicle. Thus, energy and costs can be saved.

The line pressure circuit 7 has a predetermined bottom limit line pressure such that, in a fail-safe mode, when no actuation to the operating elements is provided, e.g. in case of electrical failure, or engine failure, the line pressure is reduced to the predetermined bottom line pressure, e.g. 5 bar or 7 bar, depending on the specific hydraulic circuit. By providing this predetermined bottom line pressure, a limited actuation of the primary and secondary friction elements 2, 3 can be provided so the vehicle can run in slow-down mode, such that the vehicle can e.g slow down until a hard shoulder along the road or an other safe place can be reached. The predetermined limit bottom line pressure is provided by the spring bias on the line pressure valve 13. The spring bias is provided by spring 24 on the line pressure valve 13.

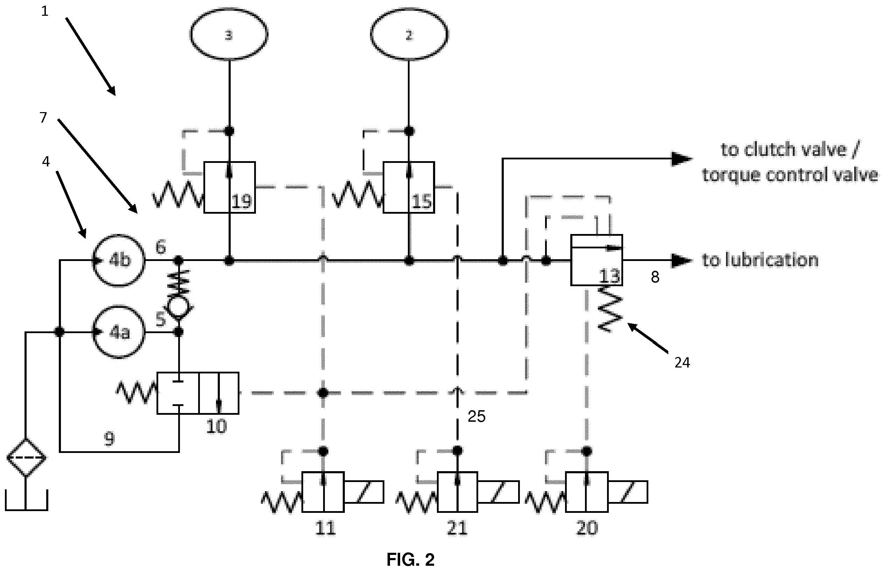

According to the invention, the line pressure valve 13 can additionally and/or alternatively be biased towards a non-bottom limit line pressure, e.g. 17 bar or 15 bar. Then, there remains sufficient pressure available in the line pressure circuit 7 for the primary and secondary friction elements 2, 3 to provide for a limp home function of the vehicle. Thereto, the bypass solenoid 11 is provided with a third function to bias the spring force 24 to the non-bottom limit line pressure. This third function of the bypass operating element 11 is optionally provided and illustrated in figure 2. In this embodiment, the function is provided via the connection 25 between the bypass solenoid 11 and the line pressure valve 13. In other embodiments, this connection 25 may be absent. As such, by providing this additional functionality, safety may be increased as the vehicle can safely continue its journey in case of e.g. an electric failure, until a safe heaven is reached.

In an embodiment, the secondary valve 19 is embodied as a pressure differential valve. Alternatively, the secondary valve 19 can be embodied as a pressure reduction valve. In an embodiment, the primary valve 15 is embodied as a pressure reduction valve and the line pressure valve 13 is can be embodied as a pressure relief valve.

According to the invention, there is a pump system 4, having the two pumps or pump chambers 4a, 4b with the outlet lines 5, 6 respectively. The pressure system 4 has the bypass circuit 9 with the bypass valve 10. Further, the line pressure circuit 7 is partially represented, showing the line pressure valve 13, the primary valve 15 and the secondary valve 19. Here, the primary valve 15 and the secondary valve 19 are both embodied as a pressure reduction valve. The valves 13, 15, 19, 10 are operated by operating elements 20, 21, 11, 11 respectively. The operating elements are typically embodied as solenoids which are operated by electrical currents passing through the solenoid. According to the invention, the bypass operating element 11 is arranged for operating the bypass valve 10 and additionally is arranged for operating the secondary valve 19. As such, a solenoid can be omitted saving costs and energy, thus fuel consumption. Also, by providing the additional operation for the secondary valve 19, in overdrive, the pressure on the secondary friction element can become lower than the pressure on the primary friction element. Thus less energy is required for actuating the secondary pulley, resulting in reduced required power, which may result in less fuel consumption or more energy available for driving the vehicle. So, a semi-independent pulley pressure control is provided that saves costs, one solenoid less, and provides for efficient performance of the hydraulic system by allowing the secondary pressure to be lower than the primary pressure in overdrive.

For the purpose of clarity and a concise description features are described herein as part of the same or separate embodiments, however, it will be appreciated that the scope of the invention may include embodiments having combinations of all or some of the features described.

Many variants will be apparent to the person skilled in the art.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A hydraulic system (1) for a vehicle transmission with at least a primary friction element (2) and a secondary friction element (3) for coupling and transmitting engine power to wheels of the vehicle by actuation of the friction elements via the hydraulic system, wherein the hydraulic system comprises
- a pressure pump system (4) having at least two outlet lines (5, 6) for supplying pressurized fluid to a line pressure circuit (7), the pressure pump having a bypass circuit (9) controlled by a bypass valve (10) such that, when the bypass circuit (9) is open to allow flow therethrough, a reduced -pressure is obtained in one of the outlet lines (5, 6);
- a primary operating element (21) for operating a primary valve (15) arranged for controlling the pressure on the primary friction element (2);
- a line operating element (20) for operating a line pressure valve (13) arranged for controlling the pressure in the line pressure circuit (7);
- a bypass operating element (11) for regulating the bypass valve (10), **characterized in that**
the bypass operating element (11) additionally is arranged to operate a secondary valve (19) controlling the pressure on the secondary friction element (3) such that, after actuation of the bypass valve (10), the pressure on the secondary friction element (3) falls lower than the pressure on the primary friction element (2).

2. Hydraulic system according to claim 1, wherein the line pressure valve (13) is biased towards a predetermined bottom limit line pressure, such that in a fail-safe mode when no actuation to operating elements is provided, the line pressure is reduced to the bottom limit line pressure resulting in reduced actuation of the friction elements (2, 3) to provide for a slow-down mode of the vehicle.

3. Hydraulic system according to claim 1, wherein the line valve (13) is biased towards a non-bottom limit line pressure, such that in a fail-safe mode, when no actuation to operating elements is provided, the line pressure is set to a predetermined line pressure resulting in sufficient actuation of the friction elements (2, 3) to provide for a limp-home mode of the vehicle.

4. Hydraulic system according to claim 3, wherein the bypass operating element (11) is additionally arranged to regulate the line valve (13) to counteract the non-bottom limit pressure bias to reduce the minimal line pressure, when actuated.

5. Hydraulic system according to any of the preceding claims, wherein the secondary valve (19) is a pressure differential valve.

6. Hydraulic system according to any of claims 1 - 4, wherein the secondary valve (19) is a pressure reduction valve.

7. Hydraulic system according to any of the preceding claims, wherein the primary valve (15) is a pressure reduction valve.

8. Hydraulic system according to any of the preceding claims, wherein the line pressure valve (13) is a pressure relief valve.

9. Method for controlling pressure in a hydraulic system for a vehicle transmission with at least a primary friction element (2) and a secondary friction element (3) for coupling and transmitting engine power to the wheels of the vehicle by actuation of the friction elements (2, 3) via the hydraulic system (1), comprising
- supplying pressurized fluid to a line pressure circuit (7) by means of a pressure pump system (4) having at least two outlet lines (5, 6);
- providing a bypass circuit (9) on the pressure pump system (4) that, when the bypass circuit (9) is open to allow flow therethrough, a reduced pressure is obtained in one of the outlet lines (5, 6);
- providing a primary operating element (21) for controlling the pressure of the primary friction element (2) via a primary valve (15);
- providing a line pressure operating element for controlling the line pressure via a line valve (13);
- providing a bypass operating element for controlling the bypass circuit (9) via a bypass valve (10);
- **characterized in that** the bypass operating element (11) additionally controls the secondary pressure on the secondary friction element (3) via a secondary valve (19);
- such that in a determined state, when less torque is required on the friction elements (2, 3); the bypass operating element (11) is actuated to open the bypass circuit (9) to reduce the flow to the line pressure circuit (7) and additionally to reduce the pressure on the secondary friction element (3) to a value lower than the pressure on the primary friction element (2), such that less torque is provided.

## Patentansprüche

1. Hydrauliksystem (1) für ein Fahrzeuggetriebe mit wenigstens einem primären Reibungselement (2) und einem sekundären Reibungselement (3) zum Koppeln und Übertragen von Motorleistung auf Räder des Fahrzeugs durch Betätigen der Reibungselemente über das Hydrauliksystem; wobei das Hydrauliksystem umfasst
- ein Druckpumpensystem (4) mit wenigstens zwei Auslassleitungen (5, 6) zum Zuführen von unter Druck stehender Flüssigkeit zu einem Leitungsdruckkreis (7), wobei die Druckpumpe einen Bypass-Kreis (9) aufweist, der von einem Bypass-Ventil (10) gesteuert wird, so, dass, wenn der Bypass-Kreis (9) geöffnet ist, um einen Durchfluss zu ermöglichen, ein reduzierter Druck in einer der Auslassleitungen (5, 6) erhalten wird;
- ein primäres Bedienelement (21) zum Bedienen eines primären Ventils (15) zum Steuern des Drucks auf das primäre Reibungselement (2) angeordnet ist;
- ein Leitungsbetätigungselement (20) zum Bedienen eines Leitungsdruckventils (13), das zum Steuern des Drucks in dem Leitungsdruckkreis (7) angeordnet ist;
- ein Bypass-Bedienelement (11) zum Regeln des Bypass-Ventils (10), das **dadurch gekennzeichnet ist, dass**
das Bypass-Bedienelement (11) zusätzlich angeordnet ist, um ein sekundäres Ventil (19) zu bedienen, das den Druck auf das sekundäre Reibungselement (3) so steuert, dass nach Betätigung des Bypass-Ventils (10) der Druck auf das sekundäre Reibungselement (3) niedriger fällt als der Druck auf das primäre Reibungselement (2).

2. Hydrauliksystem nach Anspruch 1, wobei das Leitungsdruckventil (13) in Richtung eines vorbestimmten unteren Grenzleitungsdrucks vorgespannt ist, so dass in einem ausfallsicheren Modus, wenn keine Betätigung an Bedienelementen vorgesehen ist, der Leitungsdruck auf den unteren Grenzleitungsdruck reduziert wird, der zu einer reduzierten Betätigung der Reibungselemente (2, 3) führt, um einen Verlangsamungsmodus des Fahrzeugs bereitzustellen.

3. Hydrauliksystem nach Anspruch 1, wobei das Leitungsventil (13) in Richtung eines nicht unteren Grenzleitungsdrucks vorgespannt ist, so dass in einem ausfallsicheren Modus, wenn keine Betätigung an Bedienelementen vorgesehen ist, der Leitungsdruck auf einen vorbestimmten Leitungsdruck eingestellt wird, der zu einer ausreichenden Betätigung der Reibungselemente (2, 3) führt, um einen Notlaufmodus des Fahrzeugs bereitzustellen.

4. Hydrauliksystem nach Anspruch 3, wobei das Bypass-Bedienelement (11) zusätzlich angeordnet ist, um das Leitungsventil (13) so zu regeln, dass es der nicht unteren Grenzdruckvorspannung entgegenwirkt, um den minimalen Leitungsdruck bei Betätigung zu reduzieren.

5. Hydrauliksystem nach einem der vorhergehenden Ansprüche, wobei das sekundäre Ventil (19) ein Druckdifferenzventil ist.

6. Hydrauliksystem nach einem der Ansprüche 1 bis 4, wobei das sekundäre Ventil (19) ein Druckreduzierventil ist.

7. Hydrauliksystem nach einem der vorhergehenden Ansprüche, wobei das primäre Ventil (15) ein Druckreduzierventil ist.

8. Hydrauliksystem nach einem der vorhergehenden Ansprüche, wobei das Leitungsdruckventil (13) ein Druckbegrenzungsventil ist.

9. Verfahren zum Steuern des Drucks in einem Hydrauliksystem für ein Fahrzeuggetriebe mit wenigstens einem primären Reibungselement (2) und einem sekundären Reibungselement (3) zum Koppeln und Übertragen der Motorleistung auf die Räder des Fahrzeugs durch Betätigen der Reibungselemente (2, 3) über das Hydrauliksystem (1), umfassend
- Zuführen von unter Druck stehender Flüssigkeit zu einem Leitungsdruckkreis (7) mittels eines Druckpumpensystems (4) mit wenigstens zwei Auslassleitungen (5, 6);
- Bereitstellen eines Bypass-Kreises (9) am Druckpumpensystem (4), so dass, wenn der Bypass-Kreis (9) geöffnet ist, um einen Durchfluss zu ermöglichen, ein reduzierter Druck in einer der Auslassleitungen (5, 6) erhalten wird;
- Bereitstellen eines primären Bedienelements (21) zum Steuern des Drucks des primären Reibungselements (2) über ein primäres Ventil (15);
- Bereitstellen eines Leitungsdruckbedienelementes zum Steuern des Leitungsdrucks über ein Leitungsventil (13);
- Bereitstellen eines Bypass-Bedienelements zum Steuern des Bypass-Kreises (9) über ein Bypass-Ventil (10);
- **dadurch gekennzeichnet, dass**
das Bypass-Bedienelement (11) zusätzlich den sekundären Druck auf das sekundäre Reibungselement (3) über ein sekundäres Ventil (19) steuert;
- so dass in einem bestimmten Zustand, wenn weniger Drehmoment an den Reibungselementen (2, 3) erforderlich ist; das Bypass-Bedienelement (11) betätigt wird, um den Bypass-Kreislauf (9) zu öffnen, um den Durchfluss zum Leitungsdruckkreis (7) zu reduzieren und zusätzlich den Druck auf das sekundäre Reibungselement (3) auf einen Wert zu reduzieren, der niedriger als der Druck auf dem primären Reibungselement (2) ist, so dass weniger Drehmoment bereitgestellt wird.

## Revendications

1. Système hydraulique (1) pour une transmission de véhicule dotée au moins d'un élément de friction primaire (2) et d'un élément de friction secondaire (3) pour coupler et transmettre une puissance moteur aux roues du véhicule par actionnement des éléments de friction via le système hydraulique, dans lequel le système hydraulique comprend
- un système pompe de pression (4) comportant au moins deux conduits de sortie (5, 6) pour alimenter en fluide sous pression un circuit de pression de conduit (7), la pompe de pression comportant un circuit de dérivation (9) contrôlé par une soupape de dérivation (10) de telle sorte que, lorsque le circuit de dérivation (9) est ouvert pour permettre l'écoulement à travers celui-ci, une pression réduite est obtenue dans l'un des conduits de sortie (5, 6) ;
- un élément de fonctionnement primaire (21) pour faire fonctionner une soupape primaire (15) disposée pour contrôler la pression sur l'élément de friction primaire (2) ;
- un élément de fonctionnement de conduit (20) pour faire fonctionner une soupape de pression de conduit (13) disposée pour contrôler la pression dans le circuit de pression de conduit (7) ;
- un élément de fonctionnement de dérivation (11) pour réguler la soupape de dérivation (10),
**caractérisé en ce que**
l'élément de fonctionnement de dérivation (11) est en outre disposé pour faire fonctionner une soupape secondaire (19) contrôlant la pression sur l'élément de friction secondaire (3) de telle sorte que, après actionnement de la soupape de dérivation (10), la pression sur l'élément de friction secondaire (3) tombe plus bas que la pression sur l'élément de friction primaire (2).

2. Système hydraulique selon la revendication 1, dans lequel la soupape de pression de conduit (13) est sollicitée vers une pression de conduit de limite inférieure prédéterminée, de telle sorte que dans un mode à sécurité intégrée, lorsqu'aucun actionnement des éléments de fonctionnement n'est fourni, la pression de conduit est réduite à la pression de conduit de limite inférieure entraînant un actionnement réduit des éléments de friction (2, 3) pour fournir un mode de ralentissement du véhicule.

3. Système hydraulique selon la revendication 1, dans lequel la soupape de conduit (13) est sollicitée vers une pression de conduit de limite non inférieure, de telle sorte que dans un mode à sécurité intégrée, lorsqu'aucun actionnement des éléments de fonctionnement n'est fourni, la pression de conduit est réglée à une pression de conduit prédéterminée entraînant un actionnement suffisant des éléments de friction (2, 3) pour fournir un mode de secours du véhicule.

4. Système hydraulique selon la revendication 3, dans lequel l'élément de fonctionnement de dérivation (11) est en outre disposé pour réguler la soupape de conduit (13) afin de neutraliser la sollicitation de pression de limite non inférieure pour réduire la pression de conduit minimale, lorsqu'il est actionné.

5. Système hydraulique selon l'une quelconque des revendications précédentes, dans lequel la soupape secondaire (19) est une soupape différentielle de pression.

6. Système hydraulique selon l'une quelconque des revendications 1 à 4, dans lequel la soupape secondaire (19) est une soupape de réduction de pression.

7. Système hydraulique selon l'une quelconque des revendications précédentes, dans lequel la soupape primaire (15) est une soupape de réduction de pression.

8. Système hydraulique selon l'une quelconque des revendications précédentes, dans lequel la soupape de pression de conduit (13) est une soupape de surpression.

9. Procédé de commande de pression dans un système hydraulique pour une transmission de véhicule dotée au moins d'un élément de friction primaire (2) et d'un élément de friction secondaire (3) pour coupler et transmettre une puissance moteur aux roues du véhicule par actionnement des éléments de friction (2, 3) via le système hydraulique (1), comprenant :
- l'alimentation en fluide sous pression d'un circuit de pression de conduit (7) au moyen d'un système pompe de pression (4) comportant au moins deux conduits de sortie (5, 6) ;
- la fourniture d'un circuit de dérivation (9) sur le système pompe de pression (4) de sorte que, lorsque le circuit de dérivation (9) est ouvert pour permettre l'écoulement à travers celui-ci, une pression réduite est obtenue dans l'un des conduits de sortie (5, 6) ;
- la fourniture d'un élément de fonctionnement primaire (21) pour commander la pression de l'élément de friction primaire (2) via une soupape primaire (15) ;
- la fourniture d'un élément de fonctionnement de pression de conduit pour commander la pression de conduit via une soupape de conduit (13) ;
- la fourniture d'un élément de fonctionnement de dérivation pour commander le circuit de dérivation (9) via une soupape de dérivation (10) ;
**caractérisé en ce que**
l'élément de fonctionnement de dérivation (11) commande en outre la pression secondaire sur l'élément de friction secondaire (3) via une soupape secondaire (19) ;
de telle sorte que dans un état déterminé, lorsqu'un couple moins important est nécessaire sur les éléments de friction (2, 3), l'élément de fonctionnement de dérivation (11) est actionné pour ouvrir le circuit de dérivation (9) afin de réduire l'écoulement vers le circuit de pression de conduit (7) et réduire en outre la pression sur l'élément de friction secondaire (3) à une valeur inférieure à la pression sur l'élément de friction primaire (2), de telle sorte qu'un couple moins important est fourni.
